# EUROPEAN PATENT APPLICATION

(11) **EP 4 254 378 A1**
(43) Date of publication of application: **04.10.2023**
(21) Application number: 20963620.8
(22) Date of filing: 30.11.2020
(51) Int. Cl.: G08G 1/00, B60R 16/02, B60R 25/24, G08G 1/01

(54) **COMMUNICATION CONTROL TERMINAL, COMMUNICATION CONTROL METHOD, AND COMMUNICATION CONTROL PROGRAM**

(71) Applicant: Pioneer Corporation, Tokyo 113-0021 (JP)
(72) Inventor: KOYANAGI, Shogo, Kawagoe-shi, Saitama 350-8555 (JP); KATO, Yoshiko, Kawagoe-shi, Saitama 350-8555 (JP)
(74) Representative: Hoffmann Eitle
(86) International application number: PCT/JP2020/044550
(87) International publication number: WO 2022/113357

(57) **Abstract**

A communication control terminal (1) includes: a communication unit (3) configured to perform communication with another device; an acquisition unit (11) configured to acquire a value of acceleration; a determination unit (13) configured to determine that the communication control terminal (1) is in a state of being brought into a vehicle, based on the value of acceleration; and a communication control unit (17) configured to restrict use of the communication by the communication unit (3) when the determination unit (13) determines that the communication control terminal is not in the state of being brought into a vehicle.

## Description

### Field

The present invention relates to a communication control terminal, a communication control method, and a communication control program.

### Background

There have been known methods to detect a traveling state by connecting to on-board diagnostics (OBD) 2 or a vehicle speed signal line to acquire a vehicle speed signal. In the case of OBD2, a table of compatibility with vehicle models is required, and in the case of a vehicle speed signal, processing work to connect to a vehicle body is required. The installation is therefore not simple and consequently requires work at a specialized store.

In addition, a map display device has been known that can automatically change a manner of displaying a map image depending on whether the device is in an on-board state (see, for example, Patent Literature 1). For example, the map display device described in Patent Literature 1 displays a map image suitable for use in a vehicle if the place of use is in a vehicle, and displays a map image suitable for use at home if the place of use is in a home.

### Citation List

### Patent Literature

Patent Literature 1: Japanese Patent No. 4182724

### Summary

### Technical Problem

However, the technology described in Patent Literature 1 still requires a signal supplied from the vehicle, and one of its problems is that the determination of the on-board state depends on a signal supply from the vehicle, for example.

The present invention is made in view of the problem above, and an object of the present invention is to provide a communication control terminal, a communication control method, and a communication control program that can determine an in-vehicle state independently of a signal supply from a vehicle, for example.

### Solution to Problem

A communication control terminal including: a communication unit configured to perform communication with another device; an acquisition unit configured to acquire a value of acceleration; a determination unit configured to determine that the communication control terminal is in a state of being brought into a vehicle, based on the value of acceleration; and a communication control unit configured to perform restriction of use of the communication by the communication unit when the determination unit determines that the communication control terminal is not in the state of being brought into a vehicle.

A communication control terminal including: a communication unit configured to perform communication with another device; an acquisition unit configured to acquire a value of acceleration; and a communication control unit configured to perform restriction of use of the communication by the communication unit, based on the value of acceleration.

A communication control method for use in a communication control terminal, the communication control terminal executing processing including: acquiring a value of acceleration; determining that the communication control terminal is in a state of being brought into a vehicle, based on the value of acceleration; and when determining that the communication control terminal is not in the state of being brought into a vehicle, performing restriction of use of communication by a communication unit configured to perform communication with another device.

A communication control program for use in a communication control terminal, the communication control program causing the communication control terminal to execute processing including: acquiring a value of acceleration; determining that the communication control terminal is in a state of being brought into a vehicle, based on the value of acceleration; and when determining that the communication control terminal is not in the state of being brought into a vehicle, performing restriction of use of communication by a communication unit configured to perform communication with another device.

### Brief Description of Drawings

FIG. 1 is a block diagram illustrating a functional configuration example of a communication control terminal according to an embodiment.
FIG. 2 is a diagram illustrating an example of usage scenes of the communication control terminal.
FIG. 3 is a diagram illustrating an example of a vehicle coordinate system.
FIG. 4 is a diagram illustrating an example of a method for determining an abnormal rotation state.
FIG. 5 is a diagram illustrating an example of a method for determining an abnormal vibration state.
FIG. 6 is a diagram illustrating an example of a method for determining a traveling state.
FIG. 7 is a diagram illustrating an example of a method for determining a traffic congestion state.
FIG. 8 is a diagram illustrating an example of a timer activation condition.
FIG. 9 is a diagram illustrating an example of a timer reset condition.
FIG. 10 is a flowchart illustrating the procedure of a communication control process according to an embodiment.
FIG. 11 is a diagram illustrating a hardware configuration example.

### Description of Embodiments

In the following, modes for carrying out the present invention (hereinafter referred to as embodiments) will be described with reference to the drawings. The present invention is not limited by the embodiments described below. Furthermore, in the description of the drawings, like parts are denoted by like reference signs.

### <Exemplary Information Processing Device>

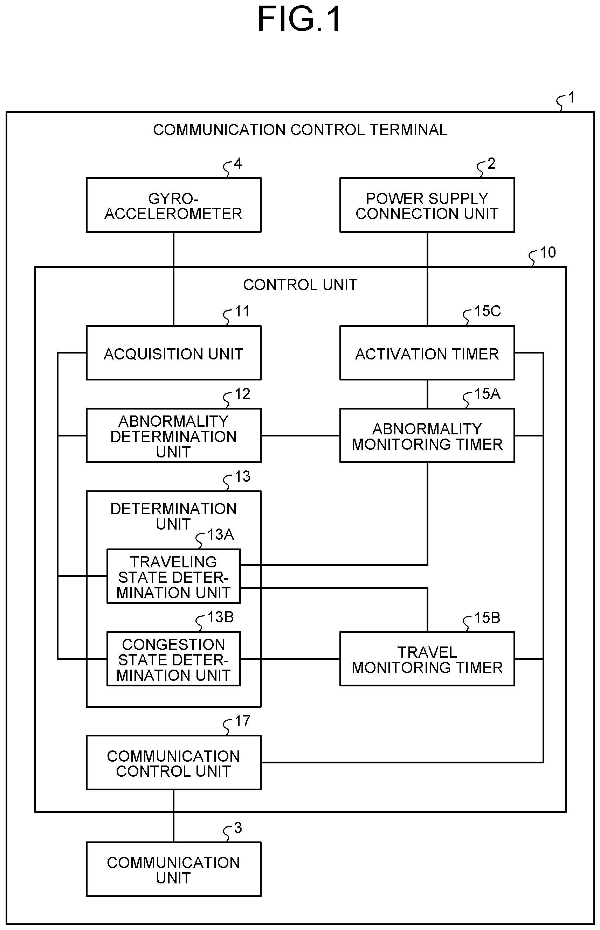

FIG. 1 is a block diagram illustrating a functional configuration example of a communication control terminal according to an embodiment. A communication control terminal 1 illustrated in FIG. 1 is an exemplary information processing device that controls various functions and services, depending on whether the communication control terminal is in a state of being brought into a vehicle. Hereinafter, the state that the communication control terminal 1 is brought into a vehicle may be referred to as "in-vehicle state".

An example of such a communication control terminal 1 is a mobile router that connects a wireless communication device compatible with a wireless local area network (LAN) or the like to a mobile network compatible with long-term evolution (LTE), 5th generation (5G), or the like.

### <Example of Application to Services>

For example, the communication control terminal 1 can be applied to a network connection service that enables a wireless LAN-compatible device to use data communication using a mobile network under the in-vehicle state.

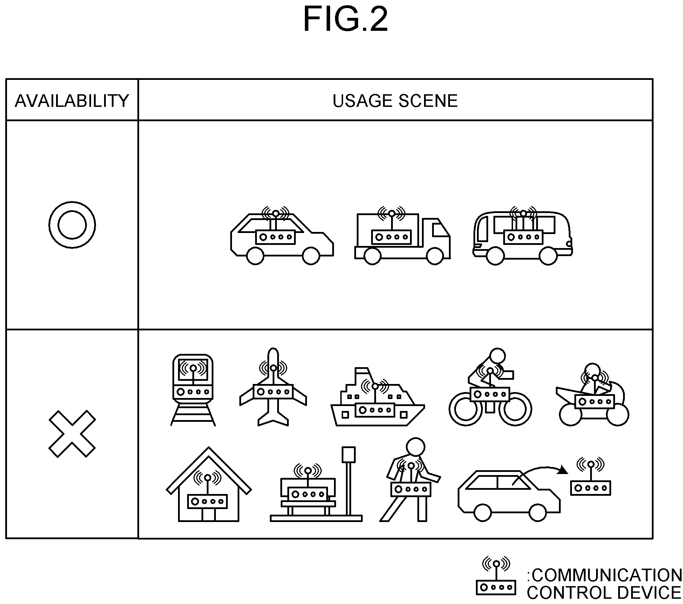

FIG. 2 is a diagram illustrating an example of usage scenes of the communication control terminal 1. In FIG. 2, the availability of data communication is associated with the usage scenes of the communication control terminal 1. As illustrated in FIG. 2, when the communication control terminal 1 is in the state of being brought into a vehicle, such as a passenger car, truck, or bus, the use of data communication is permitted. On the other hand, the use of data communication is restricted in a situation in which the communication control terminal 1 is used outside a vehicle, for example, on a train, aircraft, ship, bicycle, or motorcycle, in a residence or a public facility such as park, or on the move such as on foot.

In this way, the communication control terminal 1 according to the present embodiment can be applied to such a new network connection service that permits the use of data communication under the in-vehicle state while restricting the use of data communication under the non-in-vehicle state.

As an example only, FIG. 2 illustrates examples in which a wireless LAN-compatible device is connected to the communication control terminal 1 via wireless communication. However, the target of the network connection service is not necessarily limited to wireless LAN-compatible devices. For example, a device receiving the network connection service may be connected to the communication control terminal 1 by wire. The restriction of the use of data communication performed by the communication control terminal 1 includes restriction of data communication between the communication control terminal 1 and a wireless LAN-compatible device in a vehicle, and restriction of data communication between the communication control terminal 1 and a communication device of a carrier that provides a mobile network.

### <Configuration of Communication Control Terminal 1>

A functional configuration of the communication control terminal 1 according to the present embodiment will now be described. FIG. 1 schematically depicts blocks corresponding to the functions of the communication control terminal 1. As illustrated in FIG. 1, the communication control terminal 1 includes a power supply connection unit 2, a communication unit 3, a gyro-accelerometer 4, and a control unit 10.

The power supply connection unit 2 can be connected to a power supply installed in a vehicle or the like. As an example only, the power supply connection unit 2 can be implemented as a cable with a connector that is connected to a housing of the communication control terminal 1. For example, the connector is formed to be attachable to and detachable from an accessory socket or a cigarette lighter socket of a vehicle. When such a connector is attached to an accessory socket or a cigarette lighter socket, power feed is started from the accessory socket or the cigarette lighter socket to the main body of the communication control terminal 1 through the cable with a connector.

The communication unit 3 performs communication with other devices. For example, the communication unit 3 corresponds to an example of a communicator. In one aspect, the communication unit 3 has the function of a wireless LAN access point as a LAN-side interface. In another aspect, the communication unit 3 has a function of network connection or the like, such as for a mobile network or the like, as a wide area network (WAN)-side interface.

The gyro-accelerometer 4 corresponds to an example of an acceleration detection unit and an angular velocity detection unit. As another example of the angular velocity detection unit, a geomagnetic sensor can be used. For example, the gyro-accelerometer 4 can detect the acceleration in three axes, for example, X, Y and Z axes, and the angular velocity around three axes, for example, roll, pitch, and yaw. Although an example in which the acceleration in three axes and the angular velocity in three axes are detected is described here, the number of axes in which the acceleration and the angular velocity are detected is not limited to three. Further, although an example in which both the acceleration and the angular velocity are detected is described here, only one of them may be detected.

The control unit 10 is a processing unit that performs overall control of the communication control terminal 1. As illustrated in FIG. 1, the control unit 10 includes an acquisition unit 11, an abnormality determination unit 12, a determination unit 13, an abnormality monitoring timer 15A, a travel monitoring timer 15B, an activation timer 15C, and a communication control unit 17.

The acquisition unit 11 is a processing unit that acquires acceleration, angular velocity, and a combination of these. For example, the acquisition unit 11 corresponds to an example of an acquirer. As an example only, the acquisition unit 11 can acquire time-series data of the acceleration in three axes and the angular velocity in three axes from the gyro-accelerometer 4. For example, when the gyro-accelerometer 4 is installed inside the housing of the communication control terminal 1, the three-axis acceleration and the three-axis angular velocity detected by the gyro-accelerometer 4 can be acquired as values in a sensor coordinate system with respect to the communication control terminal 1.

As an example only, hereinafter, the abnormality determination unit 12, the determination unit 13, and the communication control unit 17 repeat processing every predetermined cycle shorter than any of the timer values of the abnormality monitoring timer 15A, the travel monitoring timer 15B, and the activation timer 15C, for example, every one minute.

The abnormality determination unit 12 is a processing unit that determines either an abnormal rotation state or an abnormal vibration state. For example, the abnormality determination unit 12 corresponds to an example of an abnormality determiner. As used herein "abnormal rotation state" refers to a state in which rotation that could not occur under the in-vehicle state is detected as abnormality. "Abnormal vibration state" refers to a state in which vibration that could not occur under the in-vehicle state is detected as abnormality. Either the "abnormal rotation state" or the "abnormal vibration state" may be referred to as an "abnormal state". In other words, by detecting an abnormal state, the abnormality determination unit 12 identifies the in-vehicle state, the non-in-vehicle state, or the state of a false operation that mimics vibrations on board.

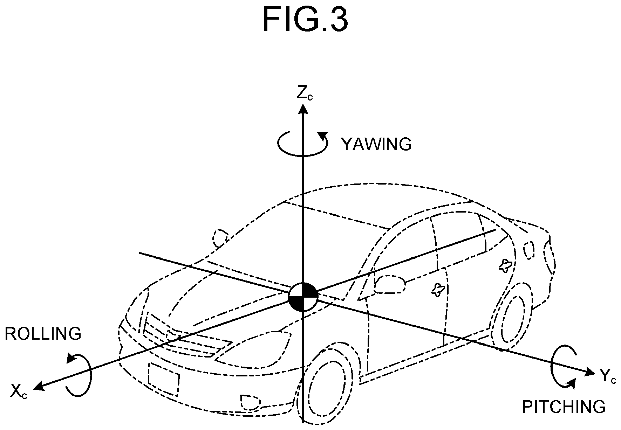

In one aspect, the abnormality determination unit 12 determines abnormal rolling that could not occur in the in-vehicle state, as an example of the abnormal rotation state described above. FIG. 3 is a diagram illustrating an example of a vehicle coordinate system. FIG. 3 illustrates a vehicle coordinate system defined by the X_{c} axis corresponding to the front-back direction of the vehicle, the Y_{c} axis corresponding to the left-right direction of the vehicle, and the Z_{c} axis corresponding to the top-bottom direction of the vehicle. In terms of the vehicle coordinate system illustrated in FIG. 3, an abnormality in angular velocity around the X_{c} axis corresponding to the front-back direction of the vehicle, that is, roll rotation speed, is determined.

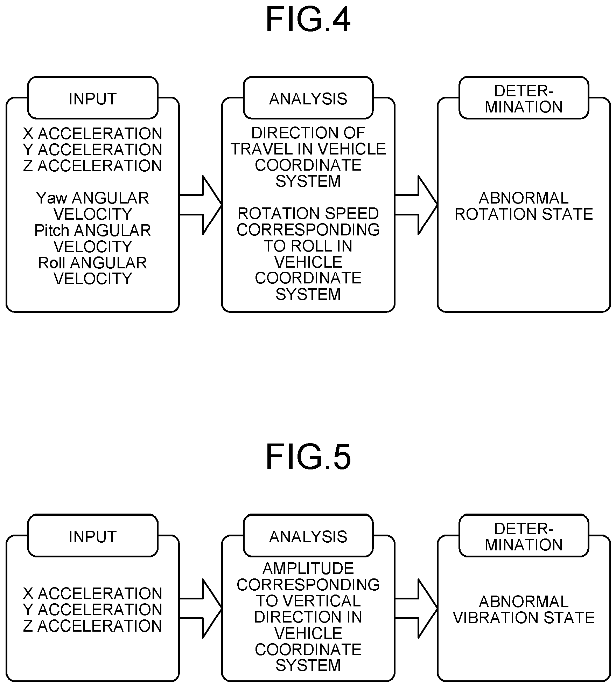

As an example only, the abnormality determination unit 12 determines the direction of travel from the acceleration and determines the abnormal rotation state based on the direction of travel and the value of rotation speed. FIG. 4 is a diagram illustrating an example of a method for determining the abnormal rotation state. As illustrated in FIG. 4, when the abnormal rotation state is determined, the X-axis acceleration, the Y-axis acceleration, and the Z-axis acceleration, as well as the roll angular velocity, the pitch angular velocity, and the yaw angular velocity can be used as inputs. For example, when the abnormal rotation state is determined every one minute as in the example above, sensor values for one minute, for example, time-series data of three-axis acceleration and three-axis angular velocity are input.

With such inputs, the abnormality determination unit 12 performs the following processing for all the sensor values corresponding to the sampling frequency of the gyro-accelerometer 4 in time-series data of sensor values, or for each sensor value resampled at a predetermined interval, for example, every one second.

In other words, the abnormality determination unit 12 analyzes the direction of travel from three-axis acceleration: the X-axis acceleration, the Y-axis acceleration, and the Z-axis acceleration. Specifically, the abnormality determination unit 12 removes gravitational acceleration from the resultant acceleration obtained by synthesizing the three-axis acceleration. In addition, the abnormality determination unit 12 projects the vector of the resultant acceleration having the gravitational acceleration removed, onto a horizontal plane. For example, the horizontal plane can be calculated in advance by calibration using the acceleration in the X, Y, and Z axes when the communication control terminal 1 is at rest, for example, immediately after activation. The abnormality determination unit 12 can then analyze the direction of travel from the vector of the resultant acceleration projected onto the horizontal plane. The direction of travel thus obtained presumably corresponds to the direction of the rotation axis X_{c} of roll motion in the vehicle coordinate system illustrated in FIG. 3. When the correlation of the orientation of each axis is fixed between the sensor coordinate system and the vehicle coordinate system, the direction of travel also does not change and the result of the initial analysis can be continuously reused.

Based on this, the abnormality determination unit 12 converts the angular velocity corresponding to roll motion in the vehicle coordinate system, among the roll, pitch, and yaw angular velocities, into a rotation speed. For example, when the gyro-accelerometer 4 outputs angular velocity (rad/sec) such as roll, pitch and yaw angular velocities, the angular velocity is converted into a rotation speed (rpm). Subsequently, the abnormality determination unit 12 determines whether the rotation speed corresponding to the roll motion in the vehicle coordinate system is equal to or greater than a threshold Th1. For example, the threshold Th1 can be set to a value greater than the upper limit of the roll rotation speed that can occur when the vehicle is turning, for example, the upper limit + a margin α. Here, the abnormal rotation state is determined if the rotation speed corresponding to the roll motion in the vehicle coordinate system is equal to or greater than the threshold Th1 at any one point of time in the time-series data of sensor values.

In this way, since the abnormality determination unit 12 detects the abnormal rotation state that could not occur in the roll motion when the vehicle is turning, the in-vehicle state, the non-in-vehicle state, and the state, for example, in which a false operation of holding and shaking the housing of the communication control terminal 1 is performed to mimic vibrations on board can be identified.

The analysis of the direction of travel and the determination of the abnormal rotation state described above can be implemented when the communication control terminal 1 is placed in any orientation in a vehicle. For example, an example in which the housing of the communication control terminal 1 is shaped like a box will be described. In this case, the analysis of the direction of travel and the determination of the abnormal rotation state described above can be implemented when any surface of the housing of the communication control terminal 1 is placed on a vehicle. Even when a surface in a vehicle on which the housing of the communication control terminal 1 is placed is tilted back and forth or left and right, the analysis of the direction of travel and the determination of the abnormal rotation state described above can be implemented.

The example in which abnormal rolling is determined has been described only by way of example. However, abnormal yawing or abnormal pitching may be determined, or a combination of two or more of these three abnormalities may be determined. Further, although the example in which the direction of travel is analyzed using acceleration has been described above, it may also be analyzed using angular velocity.

In another aspect, the abnormality determination unit 12 determines abnormal vibrations in the vertical direction that could not occur in the in-vehicle state, as an example of the abnormal vibration state described above. For example, in terms of the vehicle coordinate system illustrated in FIG. 3, an abnormality in amplitude in the Z_{c} axis corresponding to the top-bottom direction (vertical direction) of the vehicle is determined.

As an example only, the abnormality determination unit 12 determines the abnormal vibration state based on a value of acceleration. FIG. 5 is a diagram illustrating an example of a method for determining the abnormal vibration state. As illustrated in FIG. 5, when the abnormal vibration state is determined, as an example only, the X-axis acceleration, the Y-axis acceleration, and the Z-axis acceleration can be used as inputs. For example, when the abnormal vibration state is determined every one minute, time-series data of three-axis acceleration for one minute is input, as in the example described above.

With such inputs, the abnormality determination unit 12 analyzes time-series data of the amplitude in the vertical direction in the vehicle coordinate system, that is, the Z_{c} axis direction in the vehicle coordinate system, from time-series data of three-axis acceleration. Specifically, the abnormality determination unit 12 removes gravitational acceleration from the resultant acceleration obtained by synthesizing the three-axis acceleration. Subsequently, the abnormality determination unit 12 extracts an acceleration component corresponding to the normal direction to the horizontal plane, that is, the vertical direction (top-bottom direction) in the vehicle coordinate system illustrated in FIG. 3, from the resultant acceleration having the gravitational acceleration removed. The abnormality determination unit 12 then double integrates time-series data of the acceleration component corresponding to the vertical direction in the vehicle coordinate system. This operation results in time-series data of displacement corresponding to the vertical direction in the vehicle coordinate system. Further, the abnormality determination unit 12 extracts extremes, for example, maximum and minimum, from the time-series data of displacement corresponding to the vertical direction in the vehicle coordinate system. This operation results in time-series data of amplitude corresponding to the vertical direction in the vehicle coordinate system. In addition, the abnormality determination unit 12 determines whether the amplitude corresponding to the vertical direction in the vehicle coordinate system is equal to or greater than a threshold Th2. For example, the threshold Th2 can be set to a value greater than the upper limit of amplitudes that can occur as road noise when the vehicle is traveling, for example, the upper limit + a margin β. Here, the abnormal vibration state is determined if the amplitude corresponding to the vertical direction in the vehicle coordinate system is equal to or greater than the threshold Th2 at any one point of time in the time-series data of three-axis acceleration. The analysis of the amplitude and the determination of the abnormal vibration state described above can be implemented when the communication control terminal 1 is placed in any orientation in a vehicle.

In this way, since the abnormality determination unit 12 detects the abnormal vibration state that could not occur in road noise when the vehicle is traveling, the in-vehicle state, the non-in-vehicle state, and the state, for example, in which a false operation of holding and shaking the housing of the communication control terminal 1 is performed to mimic vibrations on board can be identified.

The determination unit 13 is a processing unit that determines whether the communication control terminal 1 is in the state of being brought into a vehicle. As an example only, the determination unit 13 determines the non-in-vehicle state if the abnormality determination unit 12 determines either the abnormal rotation state or the vibration movement state. On the other hand, the determination unit 13 determines the in-vehicle state if the abnormality determination unit 12 determines neither the abnormal rotation state nor the vibration movement state. One of the factors for determining the in-vehicle state when the abnormal state is not determined in this way is that when power is supplied to the communication control terminal 1, the communication control terminal 1 is attached to the accessory socket or the cigarette lighter socket of the vehicle, and the possibility that the terminal is in the in-vehicle state is higher.

For example, the determination unit 13 corresponds to an example of a determiner. As illustrated in FIG. 1, the determination unit 13 includes a traveling state determination unit 13A and a congestion state determination unit 13B.

The traveling state determination unit 13A is a processing unit that determines that the vehicle is in a traveling state. As an example only, the traveling state determination unit 13A performs a traveling state determination when the determination unit 13 determines the in-vehicle state.

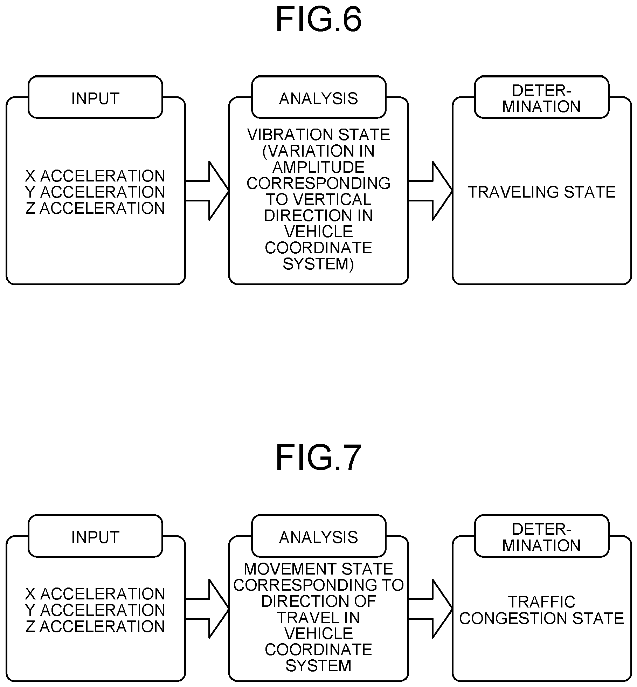

FIG. 6 is a diagram illustrating an example of a method for determining the traveling state. As illustrated in FIG. 6, when the traveling state is determined, as an example only, the X-axis acceleration, the Y-axis acceleration, and the Z-axis acceleration can be used as inputs. For example, when the traveling state is determined every one minute, time-series data of three-axis acceleration for one minute is input, as in the example described above.

With such inputs, the traveling state determination unit 13A analyzes a vibration state, for example, variations of amplitude corresponding to the vertical direction in the vehicle coordinate system, from time-series data of three-axis acceleration. Here, the analysis of the amplitude is similar to that in the determination of the abnormal amplitude state and will not be further elaborated. As for the time-series data of amplitude corresponding to the vertical direction in the vehicle coordinate system, the processing result of one of the processing units, the abnormality determination unit 12 and the traveling state determination unit 13A, can be shared by the other processing unit.

Once the time-series data of amplitude corresponding to the vertical direction in the vehicle coordinate system is obtained as described above, the traveling state determination unit 13A divides the time-series data of amplitude into intervals of a predetermined length, for example, 10 seconds. Subsequently, the traveling state determination unit 13A calculates the variance σ of the amplitude included in the interval, for each of the intervals into which the time-series data of amplitude is divided. In addition, the traveling state determination unit 13A determines whether the variance σ of the amplitude calculated for each interval is within a predetermined range. For example, the upper limit Th3 and the lower limit Th4 that define the above range can be set to the upper limit and the lower limit of the amplitude that can occur as road noise when the vehicle is traveling. If the variance of the amplitude corresponding to the vertical direction in the vehicle coordinate system is equal to or less than the upper limit Th3 and equal to or greater than the lower limit Th4 in all of the intervals obtained by dividing the time-series data of amplitude, the in-vehicle state and the traveling state are determined. The analysis of the amplitude and the determination of the traveling state described above can be implemented when the communication control terminal 1 is placed in any orientation in a vehicle.

In this way, since the traveling state determination unit 13A determines the traveling state based on the amplitude that can occur as road noise when the vehicle is traveling, the traveling state can be detected from the behavior of the vehicle that can occur when the vehicle is traveling on the road, and consequently, the detection accuracy of the traveling state can be increased.

The congestion state determination unit 13B is a processing unit that determines that the vehicle is in a traffic congestion state. As used herein "traffic congestion state" may include short-time travel, for example, travel for less than one minute, which is a traveling state determination cycle. As an example only, the congestion state determination unit 13B determines the traffic congestion state when the traveling state determination unit 13A determines the non-traveling state. Further, the congestion state determination unit 13B can determine the traffic congestion state by narrowing down to when the traveling state determination unit 13A determines that the variance of amplitude is less than the lower limit Th4 in any interval, in addition to the non-traveling state.

FIG. 7 is a diagram illustrating an example of a method for determining the traffic congestion state. As illustrated in FIG. 7, when the traffic congestion state is determined, as an example only, the X-axis acceleration, the Y-axis acceleration, and the Z-axis acceleration can be used as inputs. For example, when the traffic congestion state is determined every one minute, time-series data of three-axis acceleration for one minute is input, as in the example described above.

With such inputs, the congestion state determination unit 13B analyzes the direction of travel from three-axis acceleration: the X-axis acceleration, the Y-axis acceleration, and the Z-axis acceleration. Here, the analysis of the direction of travel is similar to that in the determination of the abnormal rotation state and will not be further elaborated. As for the direction of travel, the processing result of one of the processing units, the abnormality determination unit 12 and the congestion state determination unit 13B, can be shared by the other processing unit.

Once the direction of travel is obtained, as described above, the congestion state determination unit 13B analyzes a movement state in the direction of travel, for example, acceleration and deceleration. Specifically, the congestion state determination unit 13B performs the following processing for all of three-axis acceleration corresponding to the sampling frequency of the gyro-accelerometer 4 in the time-series data of three-axis acceleration, or for each three-axis acceleration resampled at a predetermined interval, for example, every one second. In other words, the congestion state determination unit 13B removes gravitational acceleration from the resultant acceleration obtained by synthesizing the three-axis acceleration. Subsequently, the congestion state determination unit 13B extracts an acceleration component corresponding to the direction of travel from the resultant acceleration having the gravitational acceleration removed. The congestion state determination unit 13B then once integrates the time-series data of the acceleration component corresponding to the direction of travel. This operation results in time-series data of velocity corresponding to the direction of travel. Subsequently, the congestion state determination unit 13B counts the frequency of detection of acceleration and deceleration equal to or greater than a threshold Th5 in the time-series data of velocity corresponding to the direction of travel. For example, the frequency of acceleration can be obtained by counting the number of times a velocity is detected where the sign of the acceleration is positive and the absolute value of the velocity is equal to or greater than the threshold Th5. The frequency of deceleration can be obtained by counting the number of times a velocity is detected where the sign of the acceleration is negative and the absolute value of the velocity is equal to or greater than the threshold Th5. The congestion state determination unit 13B then determines whether the vehicle is in the traffic congestion state, depending on whether the frequency of acceleration and the frequency of deceleration are equal to or greater than a threshold Th6. For example, if the frequency of acceleration and the frequency of deceleration are equal to or greater than the threshold Th6, the traffic congestion state is determined, whereas if the frequency of acceleration or the frequency of deceleration is less than the threshold Th6, the non-traffic congestion state is determined.

In this way, since the congestion state determination unit 13B determines the traffic congestion state based on the frequency of acceleration and the frequency of deceleration, the traffic congestion state can be detected based on the behavior of the vehicle that occurs in traffic congestion, and consequently, the detection accuracy of the traffic congestion state can be increased.

In the example here, whether the vehicle is in the traffic congestion state is determined based on the frequency of acceleration and the frequency of deceleration. However, whether the vehicle is in the traffic congestion state can be determined based on only one of them.

The abnormality monitoring timer 15A, the travel monitoring timer 15B, and the activation timer 15C all have a timer function. The abnormality monitoring timer 15A corresponds to an example of a first timer. The travel monitoring timer 15B corresponds to an example of a second timer. The activation timer 15C corresponds to an example of a third timer.

As an example only, the above three timers are implemented by the control unit 10 executing timer software, but they may be implemented by hardware. Further, as an example only, an example in which the above three timers are a count-up system that counts up the elapsed time will be described, but they may be a count-down system that counts down the grace period.

These three timers, the abnormality monitoring timer 15A, the travel monitoring timer 15B, and the activation timer 15C, are activated or reset in accordance with the determination results of the abnormality determination unit 12 and the determination unit 13, that is, the state of the communication control terminal 1.

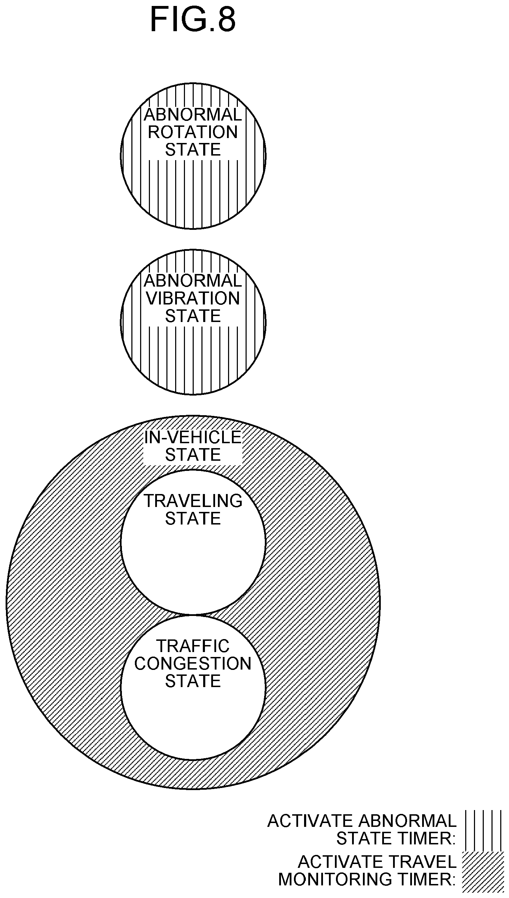

FIG. 8 is a diagram illustrating an example of a timer activation condition. In FIG. 8, a state of the communication control terminal 1 that satisfies a condition for activating the abnormality monitoring timer 15A is indicated by vertical hatching, and a state of the communication control terminal 1 that satisfies a condition for activating the travel monitoring timer 15B is indicated by diagonal hatching.

As illustrated in FIG. 8, in one of the abnormal states, either in the abnormal rotation state or in the abnormal vibration state, there is a possibility that a false operation of holding and shaking the housing of the communication control terminal 1 is performed to mimic vibrations on board. In this case, the abnormality monitoring timer 15A is activated by the abnormality determination unit 12.

In the in-vehicle state, the non-traveling state, and the non-traffic congestion state, the possibility that the vehicle is at a stop is high. In this case, if data communication is allowed during a long-time stop, it cannot be said that the network connection service is limited to the in-vehicle state and the traveling or traffic congestion state, and it is difficult to differentiate such a network communication service from existing network connection services. The travel monitoring timer 15B is therefore activated by the determination unit 13 in order to suppress data communication during a long-time stop.

Although FIG. 8 does not illustrate a condition for activating the activation timer 15C, the activation timer 15C can be activated when power feed from the vehicle's power supply such as accessory socket or cigarette lighter socket, that is, power-ON of the communication control terminal 1 is detected. In this case, the timer value of the activation timer 15C is backed up onto a nonvolatile memory or the like at the point of time when interruption of power feed from the vehicle's power supply, that is, power-OFF of the communication control terminal 1 is detected, so that the timer value can be inherited next time the communication control terminal 1 is powered ON.

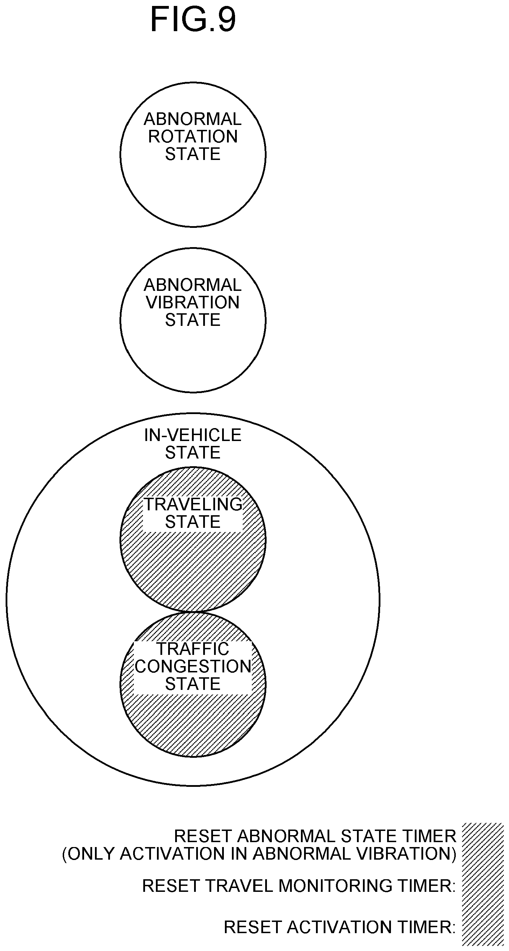

FIG. 9 is a diagram illustrating an example of a timer reset condition. In FIG. 9, a state of the communication control terminal 1 that satisfies a condition for activating the abnormality monitoring timer 15A, the travel monitoring timer 15B, and the activation timer 15C is indicated by diagonal hatching.

As illustrated in FIG. 9, in the in-vehicle state and either in the traveling state or in the traffic congestion state, it is found that the use state of the network connection service meets the intention of limiting the use to the in-vehicle state. In this case, the timer values of the travel monitoring timer 15B and the activation timer 15C are reset to the initial value, for example, "0".

Here, even in the in-vehicle state and either in the traveling state or in the traffic congestion state, the timer value of the abnormality monitoring timer 15A is not necessarily reset immediately, and there is an additional weighting condition.

Specifically, whether to reset the timer value of the abnormality monitoring timer 15A is controlled depending on which of the abnormal rotation state and the vibration movement state activates the abnormality monitoring timer 15A.

For example, if the abnormality monitoring timer 15A is activated by the abnormal rotation state, the resetting of the timer value of the abnormality monitoring timer 15A is prohibited until a timeout of the abnormality monitoring timer 15A occurs. On the other hand, if the abnormality monitoring timer 15A is activated by the abnormal vibration state, the resetting of the timer value of the abnormality monitoring timer 15A is permitted.

The reason why a timeout of the abnormality monitoring timer 15A is allowed when the abnormality monitoring timer 15A is activated by the abnormal rotation state is that the possibility that a false operation of mimicking vibrations on board is performed is higher in the abnormal rotation state than in the vibration movement state.

The communication control unit 17 is a processing unit that controls whether to perform restriction of the use of communication by the communication unit 3, depending on whether the communication control terminal is in the in-vehicle state. The communication control unit 17 corresponds to an example of a communication controller.

As an example only, the communication control unit 17 monitors the three timers: the abnormality monitoring timer 15A, the travel monitoring timer 15B, and the activation timer 15C. The communication control unit 17 then determines whether a timeout of any of the three timers occurs.

For example, as an example of a threshold to be compared with the timer value of each timer, if the timer value of the abnormality monitoring timer 15A exceeds a threshold Th7, that is, 60 minutes, it is determined that a timeout occurs. If the timer value of the travel monitoring timer 15B exceeds a threshold Th8, for example, 90 minutes, it is determined that a timeout occurs. The reason why the timeout of the abnormality monitoring timer 15A is shorter than the timeout of the travel monitoring timer 15B is that the timeout in detecting a false operation is given higher priority than the timeout in detecting a stop. If the timer value of the activation timer 15C exceeds a threshold Th9, for example, 60 minutes, it is determined that a timeout occurs.

Here, the communication control unit 17 performs restriction of the use of communication when a timeout of one of the three timers occurs. As an example only, the communication control unit 17 turns OFF the wireless communication function by turning OFF the function of a wireless LAN access point. As another example, the communication control unit 17 turns OFF the wireless communication function by disconnecting the communication connection between the communication control terminal 1 and a base station of a mobile network.

Here, an example in which the three timers are a count-up system has been described, but the three timers may be a count-down system as previously mentioned. In this case, the thresholds Th7 to Th9 set for timeouts of the three timers may be set as initial values in the three timers, and it may be determined that a timeout occurs when the timer value of each timer becomes zero.

### <Process Flow>

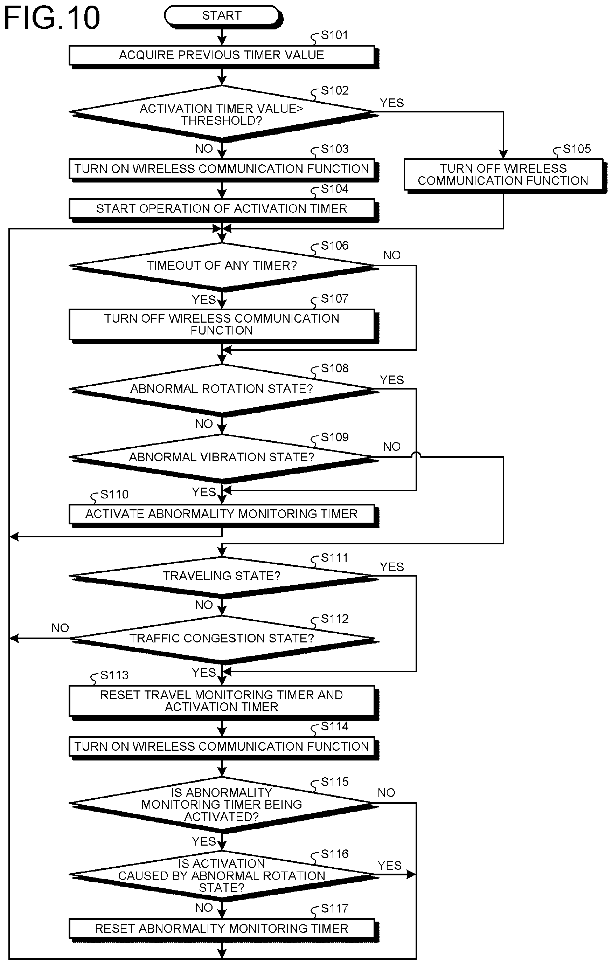

A process flow of the communication control terminal 1 according to the present embodiment will now be described. FIG. 10 is a flowchart illustrating the procedure of a communication control process according to an embodiment. As an example only, this process is started when the communication control terminal 1 is powered ON and power feed is started from the vehicle's power supply through the accessory socket or the cigarette lighter socket.

As illustrated in FIG. 10, the communication control unit 17 acquires the previous timer value of the activation timer 15C that is backed up in a nonvolatile memory or the like (step S101). If the previous timer value of the activation timer 15C does not exceed the threshold Th9 (No at step S102), the communication control unit 17 turns ON the wireless communication function (step S103) and starts the operation of the activation timer (step S104).

If the previous timer value of the activation timer 15C exceeds the threshold Th9 (Yes at step S102), the communication control unit 17 turns OFF the wireless communication function (step S105).

Subsequently, the communication control unit 17 determines whether a timeout of any of the three timers, the abnormality monitoring timer 15A, the travel monitoring timer 15B, and the activation timer 15C, occurs (step S106).

If a timeout of any of the three timers occurs (Yes at step S106), the communication control unit 17 turns OFF the wireless communication function (step S107). If a timeout of none of the three timers occurs (No at step S106), the process at step S107 is skipped and the process moves to step S108.

Subsequently, the abnormality determination unit 12 determines the direction of travel from the acceleration and determines the abnormal rotation state based on the direction of travel and the value of rotation speed (step S108). If not the abnormal rotation state (No at step S108), the abnormality determination unit 12 determines the abnormal vibration state based on the value of acceleration (step S109).

If either in the abnormal rotation state or in the vibration movement state (Yes at step S108 or Yes at step S109), the abnormality determination unit 12 starts the abnormality monitoring timer 15A (step S110).

In this way, if either in the abnormal rotation state or in the vibration movement state, the determination unit 13 determines the non-in-vehicle state, and the subsequent process is skipped and the process moves to step S106.

On the other hand, if neither in the abnormal rotation state nor the vibration movement state (No at step S108 and No at step S109), the determination unit 13 determines the in-vehicle state. In this case, the process at step S110 is skipped and the process moves to step S111.

The traveling state determination unit 13A then determines whether the vehicle is in the traveling state, depending on the vibration state determined based on the acceleration (step S111). If in the non-traveling state (No at step S111), the congestion state determination unit 13B determines whether the vehicle is in the traffic congestion state (step S112) depending on the movement state determined based on the acceleration. If the vehicle is neither in the traveling state nor in the traffic congestion state (No at step S111 and No at step S112), the subsequent process is skipped and the process moves to step S106.

If either in the traveling state or the traffic congestion state (Yes at step 5111 or Yes at step S112), the determination unit 13 resets the timer values of the travel monitoring timer 15B and the activation timer 15C (step S113). Further, the communication control unit 17 controls the wireless communication function to the ON state (step S114).

Subsequently, the determination unit 13 determines whether the abnormality monitoring timer 15A is being activated (step S115). If the abnormality monitoring timer 15A is being activated (Yes at step S115), the determination unit 13 determines whether the abnormality monitoring timer 15A is activated by detection of the abnormal rotation state (step S116).

If the abnormality monitoring timer 15A is activated by detection of the abnormal vibration state (No at step S116), the determination unit 13 resets the timer value of the abnormality monitoring timer 15A (step S117), and the process moves to step S106.

If the abnormality monitoring timer 15A is not being activated or if the abnormality monitoring timer 15A is activated by detection of the abnormal vibration state (No at step S115 or Yes at step S116), the process at step S117 is skipped and the process moves to step S106.

### <Effects of Embodiment>

As described above, the communication control terminal 1 in the present embodiment performs restriction of the use of communication when it is determined that the communication control terminal 1 is not in the in-vehicle state, based on the value of acceleration. The acceleration used to determine the in-vehicle state in this way is not necessarily supplied from the vehicle. The communication control terminal 1 in the present embodiment therefore can implement determination of the in-vehicle state independent of a signal supply from the vehicle. In addition, the terminal can be installed in any orientation.

The communication control terminal 1 in the present embodiment determines the direction of travel from the acceleration and determines that the communication control terminal 1 is not in the in-vehicle state, based on the abnormal rotation state determined based on the direction of travel and the value of rotation speed. This configuration can reduce the possibility that, for example, a false operation of holding and shaking the housing of the communication control terminal 1 to mimic vibrations on board is determined to be the in-vehicle state by mistake. The communication control terminal 1 in the present embodiment therefore can implement a robust determination of the in-vehicle state.

The communication control terminal 1 in the present embodiment acquires the value of acceleration and performs restriction of the use of communication based on the value of acceleration. The acceleration used to determine the in-vehicle state in this way is not necessarily supplied from the vehicle. The communication control terminal 1 in the present embodiment therefore can implement determination of the in-vehicle state independent of a signal supply from the vehicle.

The communication control terminal 1 in the present embodiment also determines that the communication control terminal is in the in-vehicle state and that the vehicle is in the traveling state, based on the vibration state determined based on the acceleration. In this way, since the in-vehicle state and the traveling state are determined from the behavior of the vehicle that can occur as road noise when the vehicle is traveling, the detection accuracy of each state is increased. In addition, the communication control terminal 1 in the present embodiment permits communication when it is determined that the communication control terminal is in the in-vehicle state and the vehicle is in the traveling state, and performs restriction of the use of communication when it is determined that the terminal is not in the in-vehicle state or that the vehicle is not in the traveling state. The communication control terminal 1 in the present embodiment therefore can prevent permission of communication due to failure in detection of each state or restriction of the use of communication due to a detection error of each state.

The communication control terminal 1 in the present embodiment also determines that the communication control terminal is in the in-vehicle state and that traveling of the vehicle is in the traffic congestion state, based on the movement state determined based on the acceleration. In this way, since the traffic congestion state is determined from the behavior such as movement of the vehicle that occurs during traffic congestion, the detection accuracy of each state can be increased. In addition, the communication control terminal 1 in the present embodiment permits communication when it is determined that the communication control terminal is in the in-vehicle state and the vehicle is in the traffic congestion state, and performs restriction of the use of communication when it is determined that the communication control terminal is not in the in-vehicle state or that the vehicle is not in the traffic congestion state. The communication control terminal 1 in the present embodiment therefore can prevent permission of communication due to failure in detection of each state or restriction of the use of communication due to a detection error of each state.

The communication control terminal 1 in the present embodiment determines that the communication control terminal is in the in-vehicle state and the vehicle is in the traffic congestion state, from the movement state based on time-series data of acceleration corresponding to the direction of travel of the vehicle. The communication control terminal 1 in the present embodiment therefore can determine the traffic congestion state by analyzing the behavior such as movement of the vehicle that occurs during traffic congestion, thereby increasing the detection accuracy of each state.

The communication control terminal 1 in the present embodiment detects the direction of travel of the vehicle from the acceleration acquired for each of a plurality of axes and determines that the communication control terminal is in the in-vehicle state and the vehicle is in the traffic congestion state, based on acceleration or deceleration for the direction of travel. The communication control terminal 1 in the present embodiment therefore can determine the traffic congestion state by analyzing the behavior such as start and stop of the vehicle that occurs during traffic congestion, thereby increasing the detection accuracy of each state.

The communication control terminal 1 in the present embodiment determines that the communication control terminal is in the in-vehicle state and that the vehicle is in the traffic congestion state, based on the frequency of detection of acceleration or deceleration equal to or greater than a threshold. The communication control terminal 1 in the present embodiment therefore can determine the traffic congestion state by analyzing the behavior of repeated start or stop of the vehicle that occurs during traffic congestion, thereby increasing the detection accuracy of each state.

The communication control terminal 1 in the present embodiment turns off the wireless communication function as restriction of the use of communication. The communication control terminal 1 in the present embodiment therefore can implement restriction of the use of communication, such as restriction of the function of a wireless LAN access point or interruption of connection to a base station of a mobile network.

### <Applied Examples>

Applied examples of the present embodiment will be described. For example, in the flowchart illustrated in FIG. 10, the determination of the traffic congestion state is performed if in the non-traveling state (No at step S111), but the condition for performing the determination of the traffic congestion state may be narrowed. For example, the congestion state determination unit 13B may perform the determination of the traffic congestion state by narrowing down to when the variance of amplitude corresponding to the vertical direction in the vehicle coordinate system is less than the lower limit Th4 in any of the intervals obtained by dividing time-series data of amplitude. This process can eliminate the determination of the traffic congestion state when the possibility that the vehicle is not in the traffic congestion state is high.

### <Application Examples>

Application examples of the present embodiment will be described. For example, in the present embodiment, whether to perform restriction of the use of communication is controlled depending on whether the communication control terminal is in the in-vehicle state. However, the target to be controlled depending on whether the communication control terminal is in the in-vehicle state is not limited to restriction of the use of communication. As an example only, the route selection mode of the navigation function of a portable terminal device, a tablet device, or a wearable device can be switched depending on whether the communication control terminal is in the in-vehicle state. For example, a route for vehicles is selected as the route to a destination when the communication control terminal is in the in-vehicle state, while a route for transportation means other than vehicles, for example, a route for walking or a route using public transportation is selected when the communication control terminal is in the non-in-vehicle state. As another example, whether to perform restriction of the use of the television function of a portable terminal device, a tablet device, or a wearable device can be controlled depending on whether the communication control terminal is in the in-vehicle state. For example, restriction of the use of the television function, for example, restriction of video display is performed when the communication control terminal is in the in-vehicle state, while the use of the television function is permitted when the communication control terminal is in the non-in-vehicle state.

### <System>

The process procedure, control procedure, specific names, and information including various data and parameters illustrated in the document and drawings above can be changed as desired, unless otherwise specified.

Each component of each device illustrated in the drawings is a functional concept and is not necessarily physically configured as illustrated in the drawings. In other words, the specific forms of distribution and integration of devices are not limited to those illustrated in the drawings. In other words, all or some of them can be functionally or physically distributed and integrated in desired units, depending on loads and use conditions.

Further, the processing functions performed in each device can be entirely or partially implemented by a central processing unit (CPU) and a computer program analyzed and executed by the CPU, or implemented by hardware using wired logic.

### <Hardware>

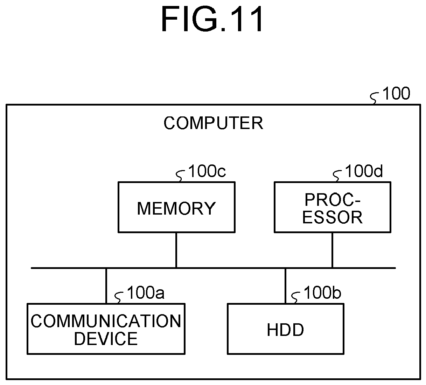

A hardware configuration example of a computer that executes an information processing program having functions similar to those of the information processing device described in the present embodiment will now be described. FIG. 11 is a diagram illustrating a hardware configuration example. As illustrated in FIG. 11, a computer 100 includes a communication device 100a, a hard disk drive (HDD) 100b, a memory 100c, and a processor 100d. The units illustrated in FIG. 11 are connected to each other, for example, by a bus.

The communication device 100a is, for example, a network interface card and performs communication with other servers. The HDD 100b stores a computer program and a database (DB) for causing the functions illustrated in FIG. 1 and the like to run.

The processor 100d reads a computer program that executes the same processing as each processing unit illustrated in FIG. 1 and the like from the HDD 100b and loads the computer program into the memory 100c to run a process that executes each function illustrated FIG. 1 and the like. For example, the process executes the same function as each processing unit of the computer 100. Specifically, the processor 100d reads, from the HDD 100b, a computer program having the same functions as the acquisition unit 11, the abnormality determination unit 12, the determination unit 13, the abnormality monitoring timer 15A, the travel monitoring timer 15B, the activation timer 15C, the communication control unit 17, and the like. The processor 100d then executes a process that executes the same processing as the acquisition unit 11, the abnormality determination unit 12, the determination unit 13, the abnormality monitoring timer 15A, the travel monitoring timer 15B, the activation timer 15C, the communication control unit 17, and the like.

In this way, the computer 100 operates as an information processing device that executes various processing methods by reading and executing a computer program. The computer 100 can also read the above computer program from a recording medium by a medium reader and execute the read computer program to implement the same functions as those in the foregoing embodiment. The computer program referred to in other embodiments is not necessarily executed by the computer 100. For example, even when other computers or servers execute the computer program, or when they cooperate to execute the computer program, the functions of the information processing device described in the present embodiment can be implemented similarly.

The computer program can be distributed via a network such as the Internet. The computer program can be recorded on a computer-readable recording medium such as a hard disk, flexible disk (FD), CD-ROM, magneto-optical disk (MO), or digital versatile disc (DVD), read from the recording medium by a computer, and then executed.

### Reference Signs List

- 1: communication control terminal
- 2: power supply connection unit
- 3: communication unit
- 4: gyro-accelerometer
- 10: control unit
- 11: acquisition unit
- 12: abnormality determination unit
- 13: determination unit
- 13A: traveling state determination unit
- 13B: congestion state determination unit
- 15A: abnormality monitoring timer
- 15B: travel monitoring timer
- 15C: activation timer
- 17: communication control unit

## Claims

1. A communication control terminal comprising:
a communication unit configured to perform communication with another device;
an acquisition unit configured to acquire a value of acceleration;
a determination unit configured to determine that the communication control terminal is in a state of being brought into a vehicle, based on the value of acceleration; and
a communication control unit configured to perform restriction of use of the communication by the communication unit when the determination unit determines that the communication control terminal is not in the state of being brought into a vehicle.

2. The communication control terminal according to claim 1, wherein
the determination unit determines that the communication control terminal is in the state of being brought into a vehicle and that the vehicle is in a traveling state, based on a vibration state determined based on the acceleration, and
the communication control unit permits the communication by the communication unit when the determination unit determines that the communication control terminal is in the state of being brought into a vehicle and the vehicle is in the traveling state, and performs restriction of use of the communication by the communication unit when the determination unit determines that the communication control terminal is not in the state of being brought into a vehicle or the vehicle is not in the traveling state.

3. The communication control terminal according to claim 1, wherein
the determination unit determines that the communication control terminal is in the state of being brought into a vehicle and that traveling of the vehicle is in a traffic congestion state, based on a movement state determined based on the acceleration, and
the communication control unit permits the communication by the communication unit when the determination unit determines that the communication control terminal is in the state of being brought into a vehicle and the vehicle is in the traffic congestion state, and performs restriction of use of the communication by the communication unit when the determination unit determines that the communication control terminal is not in the state of being brought into a vehicle or the vehicle is not in the traffic congestion state.

4. The communication control terminal according to claim 3, wherein
the acquisition unit acquires time-series data of acceleration corresponding to a plurality of axes, and
the determination unit determines that the communication control terminal is in the state of being brought into a vehicle and that the vehicle is in the traffic congestion state, based on the movement state based on the time-series data of acceleration corresponding to a direction of travel of the vehicle.

5. The communication control terminal according to claim 4, wherein the determination unit detects a direction of travel of the vehicle based on acceleration acquired for each of the axes, and determines that the communication control terminal is in the state of being brought into a vehicle and that the vehicle is in the traffic congestion state, based on acceleration or deceleration for the direction of travel.

6. The communication control terminal according to claim 5, wherein the determination unit determines that the communication control terminal is in the state of being brought into a vehicle and that the vehicle is in the traffic congestion state, based on a frequency of detection of the acceleration or the deceleration equal to or greater than a threshold.

7. The communication control terminal according to any one of claims 1 to 6, wherein the communication control unit turns off a wireless communication function as the restriction of use of the communication.

8. A communication control terminal comprising:
a communication unit configured to perform communication with another device;
an acquisition unit configured to acquire a value of acceleration; and
a communication control unit configured to perform restriction of use of the communication by the communication unit, based on the value of acceleration.

9. A communication control method for use in a communication control terminal, the communication control terminal executing processing comprising:
acquiring a value of acceleration;
determining that the communication control terminal is in a state of being brought into a vehicle, based on the value of acceleration; and
when determining that the communication control terminal is not in the state of being brought into a vehicle, performing restriction of use of communication by a communication unit configured to perform communication with another device.

10. A communication control program for use in a communication control terminal, the communication control program causing the communication control terminal to execute a process comprising:
acquiring a value of acceleration;
determining that the communication control terminal is in a state of being brought into a vehicle, based on the value of acceleration; and
when determining that the communication control terminal is not in the state of being brought into a vehicle, performing restriction of use of communication by a communication unit configured to perform communication with another device.
